Europäisches Patentamt

European Patent Office

Office européen des brevets

(19)

(11) **EP 1 722 500 A1**

(12) # EUROPEAN PATENT APPLICATION

(43) Date of publication:
**15.11.2006 Bulletin 2006/46**

(51) Int Cl.:
***H04L 1/06*** (2006.01)

(21) Application number: **05447109.9**

(22) Date of filing: **13.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **INTERUNIVERSITAIR MICROELEKTRONICA CENTRUM ( IMEC)**
**3001 Leuven (BE)**

(72) Inventors:
• **Lopez Estraviz, Eduardo**
**15552 Valdovino (ES)**
• **Horlin, Francois**
**1140 Brussels (BE)**

(74) Representative: **Van Malderen, Joëlle et al**
**pronovem - Office Van Malderen**
**Avenue Josse Goffin 158**
**1082 Bruxelles (BE)**

(54) **Method for wireless communication**

(57) The present invention is related to a method for wireless transmission of a sequence of data symbols from a transmitter to a receiver, wherein the transmitter is provided with at least two TX antennas. It comprises the steps of :
- converting the sequence of data symbols into at least one stream of blocks of independent data symbols to be transmitted,

- performing a block coding operation on the at least one stream of data symbol blocks, yielding a coded block of data symbols on each of the at least two antennas,
- applying a spreading operation on each data symbol of the coded block of data symbols, yielding spread coded blocks,
- adding transmit redundancy to the spread coded blocks,
- transmitting the spread coded blocks with transmit redundancy.

(A) Mobile terminal transmitter

(B) Base station receiver

**Fig.2**

**Description**

**Field of the invention**

The present invention relates to the field of 4G cellular wireless communication systems and air interfaces therefor.

**State of the art**

In order to meet the high data rate and quality-of-service (QoS) requirements of the future broadband cellular systems, it is widely accepted that multiple antenna techniques should be used in combination with newly designed air interfaces.

Cellular systems of the third generation (3G) are based on the direct-sequence code division multiple access (DS-CDMA) technique. DS-CDMA increases the system's intrinsic capacity and offers interesting networking capabilities. First, the communicating users do not need to be time synchronised in the uplink. Second, soft hand-over is supported between two cells employing different codes at the base stations. However, the system suffers from inter-symbol interference (ISI) and multiuser interference (MUI) caused by multipath propagation, leading to a significant performance loss.

In order to enable the design of low complexity transceivers that can cope with multipath channels, next generation cellular systems can combine the DS-CDMA accessing scheme with the single-carrier block transmission (SCBT), also known as single-carrier (SC) modulation with cyclic prefix (see 'Comparison between adaptive OFDM and single carrier modulation wi th frequency domain equalization', A. Czylwik, IEEE Proc. of VTC, May 1997, pp.865-869.). Similarly to orthogonal frequency division multiplexing (OFDM), SCBT transforms a time dispersive channel into a set of parallel independent flat sub-channels that can be equalised at a low complexity. Since the SCBT technique benefits from a low peak-to-average power ratio (PAPR), it has been recognised as an interesting alternative to OFDM in the uplink, that could significantly reduce the constraints on the analogue front-end as well as the processing complexity at the terminal. DS-CDMA is applied on top of the SCBT equalised channel. The DS-CDMA signals are either spread across the single-carrier sub-channels, leading to single-carrier CDMA (SC-CDMA) (see Vollmer et al., 'Comparative study of joint detection techniques for TD-CDMA based mobile radio systems', IEEE J. on Sel. Areas in Comm. , vol. 19, no. 8, pp. 1461-1475, Aug. 2001), or across the SCBT blocks, leading to single-carrier block-spread CDMA (SCBS-CDMA). SC-CDMA and SCBS-CDMA can be seen the SC counter-parts of multi-carrier CDMA (MC-CDMA) and multi-carrier block-spread CDMA (MCBS-CDMA), respectively. SCBS-CDMA preserves the orthogonality amongst the users, regardless of the underlying multipath channel, which enables perfect user separation through low complexity code correlation. It entails however a larger symbol latency than SC-CDMA, that makes it impractical in medium-to-high mobility cellular environments. For time-selective channels, SC-CDMA is the only viable air interface.

Multiple-input multiple-output (MIMO) systems, which deploy multiple antennas at both ends of the wireless link, explore the extra spatial dimension, besides the time, frequency, and code dimensions, to significantly increase the spectral efficiency and to improve the link reliability relative to single antenna systems. In this context, space-time block coding (STBC) has gained a lot of attention as an effective transmit diversity technique to combat fading in wireless communications. Orthogonal space-time (ST) block codes for two transmit antennas have first been introduced by Alamouti ('A simple transmit diversity technique for wireless communications', IEEE Journal on Selected Areas in Communications, vol.16, no.8, Oct.1998) and has later been generalised to an arbitrary number of transmit antennas. The ST codes are initially designed for frequency flat fading channels. Therefore, the time reversal (TR) STBC technique has been proposed as an extension to frequency selective channels. These designs have remarkably simple maximum-likelihood (ML) decoding algorithms based on linear processing at the receiver. In specific cases of two or four transmit antennas, these diversity schemes provide full and three-quarters of the maximum possible transmission rate, respectively.

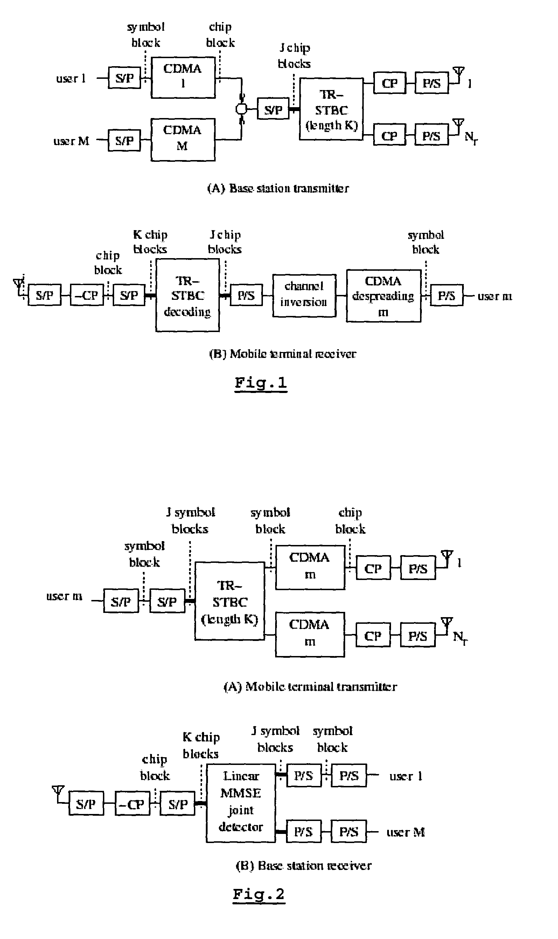

The combination of STBC with the SC-based air interfaces has only been addressed very recently. The paper 'Space-time block-coding for single-carrier block transmission DS-CDMA downlink' (F. Petré et al., IEEE J. on Sel. Areas in Comm., Special issue on MIMO Systems and Applications, vol. 21, no.3, pp. 350-361, Apr. 2003) first combines STBC and SCBS-CDMA. Since the SCBS-CDMA scheme is orthogonal in the users (both for uplink and downlink), deterministic ML user separation through low-complexity code matched filtering and ML ST multi-stream separation through linear decoding can be consecutively applied without any performance loss with respect to the optimal ML joint multi-user detector and ST block decoder. On the other hand, e.g. Vook et al. ('Cyclic-prefix CDMA with antenna diversity', IEEE Proceedings of VTC Spring, May 2002, vol. 2, pp. 1002-1006) combine STBC and SC-CDMA. The TR STBC technique is applied at the chip level, on the signals resulting from the CDMA spreading (see Fig.1, where a downlink scenario is asumed). The receiver, intuitively composed of the counter-part of each operation at the transmitter, performs first the STBC decoding and the inversion of the channels, followed by the CDMA user despreading (Fig.1). Since multiple channels cannot be inverted at the same time, this method is only applicable to the downlink. For the same reason, the transmit antenna symbol streams are not orthogonal in the uplink.

Patent application EP1357693A1 discloses a method for multi-user wireless communication of data signals. The method focuses on the downlink bottleneck. In the method a spreading across a number of symbol blocks is performed. It implicitly assumes the channel remains constant over a number of symbol blocks.

### Aims of the invention

The present invention aims to provide a method for wireless transmission and a corresponding method for reception of a data symbol sequence that overcome the problems of the prior art, specifically with respect to latency.

### Summary of the invention

The present invention relates to a method for wireless transmission of a sequence of data symbols from a transmitter to a receiver, whereby the transmitter is provided with at least two transmit antennas. The method comprises the following steps :

- Converting (e.g. serial-to-parallel conversion) the sequence of information symbols into at least one stream of blocks of independent data symbols to be transmitted,
- performing a block coding operation on said at least one stream of data symbol blocks, yielding a coded block of data symbols on each of the at least two antennas,
- applying a spreading operation on each data symbol of the coded block of data symbols, yielding spread coded blocks,
- adding transmit redundancy to the spread coded blocks, and
- transmitting the spread coded blocks with transmit redundancy.

In a most preferred embodiment the block coding operation is a space-time block coding operation, implemented by coding the various transmit antenna streams across a number of time instants. In a scheme with two transmit antennas for example, the transmitted block at time instant n+1 from one antenna is the time-reversed conjugate of the transmitted symbol at time instant n from the other antenna (with possible permutation and sign change). This property allows for deterministic transmit stream separation at the receiver, regardless of the underlying frequency selective channels.

Advantageously the steps of the method are performed for a plurality of users, each user being connected to a user-specific terminal.

The spreading operation is preferably performed with a user-specific code sequence. The step of adding transmit redundancy typically comprises the addition of a cyclic prefix. It is important to note that in the approach according to the invention, the symbol spreading is performed on the block coded data blocks.

The transmitter provided with at least two antennas preferably is a terminal and the receiver a base station.

The present invention also relates to a method for wireless reception of block coded data transmitted, for a plurality of users, by a plurality of transmitters, whereby each of the transmitters is provided with at least two transmit antennas. The method comprises the steps of :

- separating the received block coded data in a number of received data streams, said number dependent on the block coding applied on the blocks of data in the transmitters, said received data streams comprising block coded blocks of data from different users and different transmit antennas, and
- performing on the block coded blocks of data comprised in said number of received data streams a computation step to order the received data per user and per transmit antenna, said computation step comprising a block decoding and an intrablock despreading operation, whereby said computation step divides each of the block coded blocks of data into sub-channels, said block coded blocks of data subsequently being combined per sub-channel, yielding a single combined data stream of per sub-channel blocks of data, ordered per user and per transmit antenna.

Advantageously the method comprises the further steps of

- cancelling interference by combining, for each of the sub-channels, data in the single combined data stream of per sub-channel blocks of data corresponding to only one sub-channel, yielding interference cancelled per sub-channel blocks of output data,
- transforming the interference cancelled per sub-channel blocks of output data over all sub-channels, yielding transformed interference cancelled blocks of output data,
- reordering the transformed interference cancelled blocks of output data per user and per transmit antenna.

Preferably the step of dividing into sub-channels is performed by means of a plurality of FFT's. The step of transforming is typically carried out with an inverse FFT operation.

In a preferred embodiment the computation step comprises a phase correction on each of the sub-channels. The interference cancellation step may comprise an amplitude equalisation on each of the sub-channels.

In a specific embodiment a plurality of received antennas is used for receiving the block coded data.

In another aspect the invention relates to a transmit device for wireless communication, performing the method for wireless transmission as previously described.

The invention further relates to a transmit device for wireless transmission of at least one stream of blocks of data. The transmit device is provided with at least two transmit antennas and further comprises block coding means to perform a block coding operation on the at least one stream of blocks of data. The block coding means thereby output a coded block of data on each of the at least two antennas. The transmit device further comprises spreading means to spread the coded block of data on each of the at least two antennas.

In another aspect the invention relates to a receiver device for wireless communication, performing the above described method for wireless reception.

In yet another aspect the invention relates to a receiver device for wireless reception of block coded data transmitted, for a plurality of users, by a plurality of transmitters, each of the transmitters being provided with at least two transmit antennas. The receiver device comprises at least one receive antenna, separating means for separating the received block coded data in a number of received data streams, and further, for each of the received data streams, means for block decoding and block despreading.

In a preferred embodiment the receiver device further comprises interference cancellation means arranged for cancelling interference on a sub-channel per sub-channel basis.


### Short description of the drawings


Fig. 1 represents a prior art scheme.

Fig. 2 represents a transceiver scheme according to the invention.

Fig. 3 represents the transmitter model.

Fig. 4 represents the receiver model.

Fig. 5 represents a receiver model arranged for dealing with a dynamic environment.

Fig. 6 represents the BER as a function of the received $E_b/N_o$.

Fig. 7 represents the BER as a function of the number of users.


### Detailed description of the invention


The present invention discloses a method to combine STBC and SC-CDMA, applicable in the uplink as well as in the downlink. The STBC coding is applied at the symbol level, before the CDMA spreading. The scheme preserves the orthogonality between the transmit antenna symbol streams. At the receiver, a low complexity joint multi-user detector and ST block decoder, optimised according to the minimum mean square error (MMSE) criterion, is proposed.

Figure 2 shows a general scheme according to the invention for an uplink scenario, i.e. from a user-terminal to a base station. As can be seen in Fig.2, the order of the CDMA and the STBC blocks have changed as compared to the scheme in Fig.1.

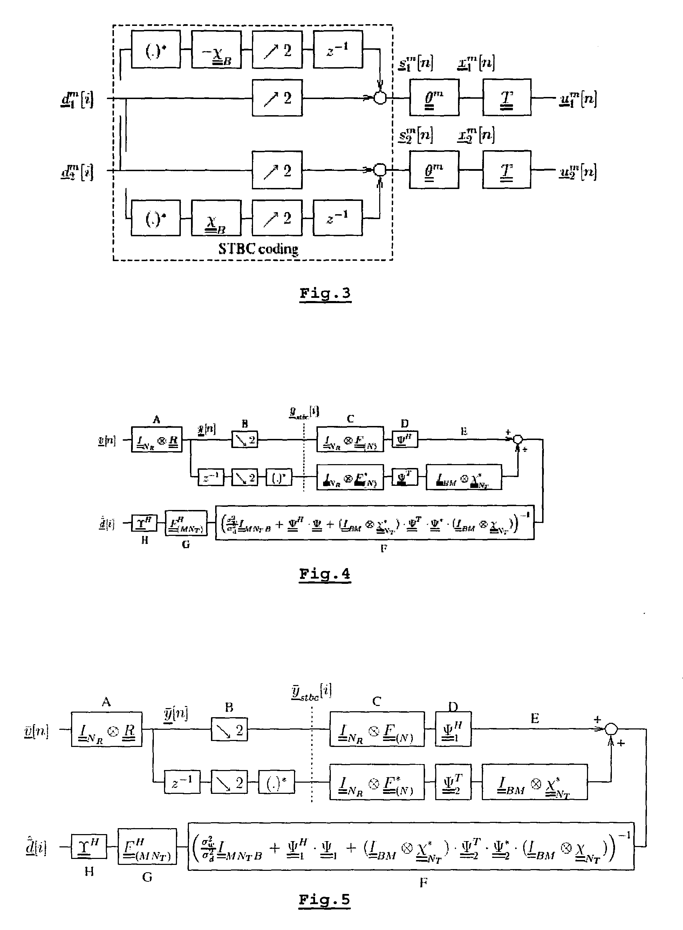

A transmission scheme for the m-th user ($m=1, ..., M$) is depicted in Fig. 3. Each user sends its data through a plurality of transmit antennas. The information symbols, $d_{n_T}^m[i]$ ($n_T = 1, ..., N_T$), which are assumed independent and of variance equal to $\sigma_d^2$, are first serial-to-parallel converted into blocks of B symbols, leading to the symbol block sequence $\underline{d}_{n_T}^m[i] := [d_{n_T}^m[iB]...d_{n_T}^m[(i+1)B-1]]^T$.

For conciseness the case of $N_T = 2$ transmit antennas is considered and the STBC scheme proposed by Alamouti is extended to the uplink of a SC-CDMA-based communication system. However the developments can be extended to any number of antennas by using the orthogonal coding designs (see Tarokh et al., 'Space-time block codes from orthogonal designs', IEEE Trans. on Information Theory, vol. 45, pp. 1456-1467, July 1999).

An STBC technique is implemented by coding the two antenna streams across two time instants, as follows :

$$\begin{bmatrix} \underline{s}_1^m[n] \\ \underline{s}_2^m[n] \end{bmatrix} = \begin{bmatrix} \underline{d}_1^m[i] \\ \underline{d}_2^m[i] \end{bmatrix} \qquad (\text{eq. 1})$$

$$\begin{bmatrix} \underline{s}_1^m[n+1] \\ \underline{s}_2^m[n+1] \end{bmatrix} = \underline{\underline{\chi}} \cdot \begin{bmatrix} \underline{d}_1^m[i]^* \\ \underline{d}_2^m[i]^* \end{bmatrix} \qquad (\text{eq. 2})$$

where $i=\lfloor n/2\rfloor$. The coding matrix $\chi$ is the result of the Kronecker product of submatrices $\underline{\underline{\chi}}_{N_T}$ and $\chi_B$, that implement the simple Alamouti scheme across two antennas in flat fading channels and the additional time-reversal permutation needed for time-dispersive channels, respectively, as expressed in $\underline{\underline{\chi}} := \underline{\underline{\chi}}_{N_T} \otimes \underline{\underline{\chi}}_B$. The Kronecker product of two matrices $\underline{A} = (a_{ij})$ and $\underline{C}$ is defined as :

$$\underline{A} \otimes \underline{C} := \begin{bmatrix} a_{11}\underline{C} & \cdots & a_{1n}\underline{C} \\ \vdots & \ddots & \vdots \\ a_{n1}\underline{C} & \cdots & a_{nn}\underline{C} \end{bmatrix} \qquad (\text{eq. 3})$$

The submatrices $\chi_{N_T}$ and $\chi_B$ are defined as

$$\underline{\underline{\chi}}_{N_T} := \begin{bmatrix} 0 & -1 \\ 1 & 0 \end{bmatrix} \qquad (\text{eq. 4})$$

$$\underline{\underline{\chi}}_B := \underline{\underline{F}}_B^T \cdot \underline{\underline{F}}_B \qquad (\text{eq. 5})$$

where $\underline{F}_B$ is the Fast Fourier transform (FFT) matrix of size B. The coding matrix $\chi$ can thus be written as

$$\underline{\underline{\chi}} := \begin{bmatrix} 0 & -\underline{\underline{\chi}}_B \\ \underline{\underline{\chi}}_B & 0 \end{bmatrix} \qquad (\text{eq. 6})$$

and therefore one obtains

$$\begin{bmatrix} \underline{s}_1^m[n+1] \\ \underline{s}_2^m[n+1] \end{bmatrix} = \begin{bmatrix} -\underline{\underline{\chi}}_B \cdot \underline{d}_2^m[i]^* \\ \underline{\underline{\chi}}_B \cdot \underline{d}_1^m[i]^* \end{bmatrix} \qquad (\text{eq. 7})$$

The transmitted block at time instant $n+1$ from one antenna is the time-reversed conjugate of the transmitted symbol at time instant *n* from the other antenna (with possible permutation and sign change). This property allows for deterministic transmit stream separation at the receiver, regardless of the underlying frequency selective channels. Assuming a scenario with $N_T$=4 transmit antennas and a multiple antenna time coding length 8 (i.e. for each time instant *n* there is a coding across 8 time instants *n*, *n+1*, ..., *n+7*) the following scheme could apply, with $\underline{d}^m_\alpha[i]$ denoting the symbol block to be transmitted :

| | n | n+1 | n+2 | n+3 | n+4 | n+5 | n+6 | n+7 |
|---|---|---|---|---|---|---|---|---|
| Ant.1 | $\underline{d}_1^m[i]$ | $-\underline{d}_2^m[i]$ | $-\underline{d}_3^m[i]$ | $-\underline{d}_4^m[i]$ | $\underline{\underline{\chi}}_B \cdot \underline{d}_1^m[i]^*$ | $-\underline{\underline{\chi}}_B \cdot \underline{d}_2^m[i]^*$ | $-\underline{\underline{\chi}}_B \cdot \underline{d}_3^m[i]^*$ | $-\underline{\underline{\chi}}_B \cdot \underline{d}_4^m[i]^*$ |
| Ant.2 | $\underline{d}_2^m[i]$ | $\underline{d}_1^m[i]$ | $\underline{d}_4^m[i]$ | $-\underline{d}_3^m[i]$ | $\underline{\underline{\chi}}_B \cdot \underline{d}_2^m[i]^*$ | $\underline{\underline{\chi}}_B \cdot \underline{d}_1^m[i]^*$ | $\underline{\underline{\chi}}_B \cdot \underline{d}_4^m[i]^*$ | $-\underline{\underline{\chi}}_B \cdot \underline{d}_3^m[i]^*$ |
| Ant.3 | $\underline{d}_3^m[i]$ | $-\underline{d}_4^m[i]$ | $\underline{d}_1^m[i]$ | $\underline{d}_2^m[i]$ | $\underline{\underline{\chi}}_B \cdot \underline{d}_3^m[i]^*$ | $-\underline{\underline{\chi}}_B \cdot \underline{d}_4^m[i]^*$ | $\underline{\underline{\chi}}_B \cdot \underline{d}_1^m[i]^*$ | $\underline{\underline{\chi}}_B \cdot \underline{d}_2^m[i]^*$ |
| Ant.4 | $\underline{d}_4^m[i]$ | $\underline{d}_3^m[i]$ | $-\underline{d}_2^m[i]$ | $\underline{d}_1^m[i]$ | $\underline{\underline{\chi}}_B \cdot \underline{d}_4^m[i]^*$ | $\underline{\underline{\chi}}_B \cdot \underline{d}_3^m[i]^*$ | $-\underline{\underline{\chi}}_B \cdot \underline{d}_2^m[i]^*$ | $\underline{\underline{\chi}}_B \cdot \underline{d}_1^m[i]^*$ |

SC-CDMA first performs classical DS-CDMA symbol spreading, followed by single-carrier block transmission (SCBT) modulation, such that the information symbols are spread across the different SCBT sub-channels. In the approach according to the invention, the symbol spreading is performed on the STBC coded data blocks. With $N$ denoting the spreading code length and $Q=BN$, the $QxB$ spreading matrix $\underline{\underline{\theta}}^m$ that spreads the symbols across the subchannels, is defined as:

$$\underline{\underline{\theta}}^{m} := \underline{\underline{I}}_{B} \otimes \underline{a}^{m}, \qquad (eq. \ 8)$$

with $\underline{a}^m := [a^m[0]...a^m[N\text{-}1]]^T$ the m-th user's $Nx1$ code vector and $\underline{I}_B$ the $BxB$ identity matrix. The blocks $\underline{x}_{n_T}^{m}[n]$ are

obtained by multiplying the blocks $\underline{s}_{n_T}^{m}[n]$ with the $\underline{\underline{\theta}}^m$ spreading matrix:

$$\underline{x}_{n_T}^{m}[n] := \underline{\underline{\theta}}^{m} \cdot \underline{s}_{n_T}^{m}[n]. \qquad (eq. \ 9)$$

Finally, the $KxQ$ ($K{\geq}Q$) transmit matrix, $\underline{\underline{T}}$, adds some transmit redundancy to the time-domain chip blocks:

$$\underline{u}_{n_T}^{m}[n] := \underline{\underline{T}} \cdot \underline{x}_{n_T}^{m}[n]. \qquad (eq. \ 10)$$

With $K=Q+L$, $\underline{\underline{T}} = \underline{\underline{T}}_{cp} := [\underline{\underline{I}}_{cp}^{T}, \underline{\underline{I}}_{Q}^{T}]^{T}$ , where $\underline{\underline{I}}_Q$ is the identity matrix of size $Q$ and $\underline{\underline{I}}_{cp}$ consists of the last $L$ rows of

$\underline{\underline{I}}_Q$, $\underline{\underline{T}}$ adds redundancy in the form of a length-L cyclic prefix (CP). The resulting transmitted chip block sequence,

$\underline{u}_{n_T}^{m}[n]$ , is parallel-to-serial converted into the scalar sequence, $[u_{n_T}^{m}[nK]...u_{n_T}^{m}[(n+1)K-1]]^{T} := \underline{u}^{m}[n]$ , and transmitted over the air at a rate $1/T_c$.

After propagation through the different user channels the signal is received - in the most general case- at $N_R$ receive antennas. A specific case of high practical importance is obtained by putting $N_R$=1, i.e. for only one receive antenna. Adopting a discrete-time baseband equivalent model, the chip-sampled received signal at antenna $n_R$ ($n_R =$

1, ..., $N_R$), $v_{n_R}[n]$ , is the superposition of a channel-distorted version of the $MN_T$ transmitted user signals, which can be written as:

$$v_{n_R}[n] = \sum_{m=1}^{M} \sum_{n_T=1}^{N_T} \sum_{l=0}^{L^m} h_{n_R,n_T}^{m}[l] u_{n_T}^{m}[n-l] + w_{n_R}[n], \qquad (eq. \ 11)$$

where $h_{n_R,n_T}^{m}[l]$ denotes the chip-sampled FIR channel impulse response (with length $L^m$ taps) that models the frequency-selective multipath propagation between the $m$-th user's antenna $n_T$ and the base station antenna $n_R$, including the effect of transmit/receive filters and the remaining asynchronism of the quasi-synchronous users, and $w_{n_R}[n]$ is

additive white gaussian noise (AWGN) at the base station antenna $n_R$ with variance $\sigma_w^2$. Furthermore, the maximum channel impulse response length $L$, i.e. $L = max(L^m)$, can be well approximated by $L \approx {}_L(\tau_{max,a}+\tau_{max,s})/T_c{}^{\parallel}$ +1, where $\tau_{max,a}$ is the maximum asynchronism between the nearest and the farthest user of the cell, and $\tau_{max,s}$ is the maximum excess delay within the given propagation environment.

Assuming perfect time and frequency synchronisation, the received sequence $v_{n_R}[n]$ is serial-to-parallel converted into the block sequence $\underline{v}_{n_R}[n] := [v_{n_R}[nK]\ldots v_{n_R}[(n+1)K-1]]^T$. From the scalar input/output relationship in equation (11), the corresponding block input/output relationship can be derived:

$$\underline{v}_{n_R}[n] = \sum_{m=1}^{M}\sum_{n_T=1}^{N_T}\left(\underline{\underline{H}}^m_{n_R,n_T}[0]\cdot\underline{u}^m_{n_T}[n]+\underline{\underline{H}}^m_{n_R,n_T}[1]\cdot\underline{u}^m_{n_T}[n-1]\right)+\underline{w}_{n_R}[n] \qquad (eq.12)$$

where $\underline{w}_{n_R}[n] := [w_{n_R}[nK]\ldots w_{n_R}[(n+1)K-1]]^T$ represents the corresponding noise block sequence, $\underline{\underline{H}}^m_{n_R,n_T}[0]$ is a *KxK* lower triangular Toeplitz matrix with entries $[\underline{\underline{H}}^m_{n_R,n_T}[0]]_{p,q} = h^m_{n_R,n_T}[p-q]$, and $\underline{\underline{H}}^m_{n_R,n_T}[1]$ is a KxK upper triangular Toeplitz matrix with entries $[\underline{\underline{H}}^m_{n_R,n_T}[1]]_{p,q} = h^m_{n_R,n_T}[K+p-q]$. The delay-dispersive nature of multipath propagation gives rise to so-called inter-block interference (IBI) between successive blocks, which is modelled by the second term in equation (12).

The *QxK* receive matrix $\underline{R}$ removes the redundancy from the chip blocks, i.e. $\underline{y}_{n_R}[n] := \underline{\underline{R}}\cdot\underline{v}_{n_R}[n]$. With $\underline{\underline{R}} = \underline{\underline{R}}_{cp} = [\underline{0}_{Q\times L},\underline{I}_Q]$ in which $\underline{0}_{QxL}$ is a *QxL* matrix of zeros, $\underline{R}$ again discards the length-L cyclic prefix. The purpose of the transmit $\underline{T}$/receive $\underline{R}$ pair is twofold. First, it allows for simple block-by-block processing by removing the IBI, that is, $\underline{\underline{R}}\cdot\underline{\underline{H}}^m_{n_R,n_T}[1]\cdot\underline{\underline{T}} = \underline{0}$, provided the CP length is at least the maximum channel impulse response length *L*. Second, it enables low-complexity frequency-domain processing by making the linear channel convolution to appear circulant to the received block. This results in a simplified block input/output relationship in the time-domain:

$$\underline{y}_{n_R}[n] = \sum_{m=1}^{M}\sum_{n_T=1}^{N_T}\underline{\underline{\tilde{H}}}^m_{n_R,n_T}\cdot\underline{x}^m_{n_T}[n]+\underline{z}_{n_R}[n] \qquad (eq.\ 13)$$

where $\underline{\underline{\tilde{H}}}^m_{n_R,n_T} = \underline{\underline{R}}\cdot\underline{\underline{H}}^m_{n_R,n_T}[0]\cdot\underline{\underline{T}}$ is a circulant channel matrix, and $\underline{z}_{n_R}[n] = \underline{\underline{R}}\cdot\underline{w}_{n_R}[n]$ is the corresponding noise block sequence. It is to be noted that circulant matrices can be diagonalised by FFT operations, that is, $\underline{\underline{\tilde{H}}}^m_{n_R,n_T} = \underline{\underline{F}}^H_Q\cdot\underline{\underline{\Lambda}}^m_{n_R,n_T}\cdot\underline{\underline{F}}_Q$, where $\underline{\underline{\Lambda}}^m_{n_R,n_T}$ is a diagonal matrix composed of the frequency-domain channel response between the *m*-th user's antenna $n_T$ and the base station antenna $n_R$.

The generalised input/output matrix model that relates the STBC coded symbol vector defined as

$$\underline{s}[n] := \left[\underline{s}^1[n]^T \quad \cdots \quad \underline{s}^M[n]^T\right]^T \qquad (eq.\ 14)$$

with for each user *m* (*m* = 1, ..., *M*) :

$$\underline{s}^{m}[n] := \left[ \underline{s}_{1}^{m}[n]^{T} \quad \cdots \quad \underline{s}_{N_{T}}^{m}[n]^{T} \right]^{T} \qquad (\text{eq. 15})$$

to the received and noise vectors defined as

$$\underline{y}[n] := \left[ \underline{y}_{1}[n]^{T} \quad \cdots \quad \underline{y}_{N_{R}}[n]^{T} \right]^{T} \qquad (\text{eq. 16})$$

$$\underline{z}[n] := \left[ \underline{z}_{1}[n]^{T} \quad \cdots \quad \underline{z}_{N_{R}}[n]^{T} \right]^{T} \qquad (\text{eq. 17})$$

is given by

$$\underline{y}[n] = \underline{\underline{H}} \cdot \underline{\underline{\theta}} \cdot \underline{s}[n] + \underline{z}[n] \qquad (\text{eq. 18})$$

where the channel matrix is

$$\underline{\underline{H}} := \begin{bmatrix} \underline{\underline{H}}_{1}^{1} & \cdots & \underline{\underline{H}}_{1}^{M} \\ \vdots & \vdots & \vdots \\ \underline{\underline{H}}_{N_{R}}^{1} & \cdots & \underline{\underline{H}}_{N_{R}}^{M} \end{bmatrix} \qquad (\text{eq. 19})$$

with

$$\underline{\underline{H}}_{n_{R}}^{m} := \left[ \underline{\underline{H}}_{n_{R},1}^{m} \quad \cdots \quad \underline{\underline{H}}_{n_{R},N_{T}}^{m} \right] \quad (m = 1,\cdots,M; n_{R} = 1,\cdots,N_{R}) \qquad (\text{eq. 20})$$

and

$$\underline{\underline{\theta}} := \begin{bmatrix} \underline{\underline{I}}_{N_{T}} \otimes \underline{\underline{\theta}}^{1} & \cdots & \underline{\underline{0}}_{N_{T}Q \times N_{T}B} \\ \vdots & \ddots & \vdots \\ \underline{\underline{0}}_{N_{T}Q \times N_{T}B} & \cdots & \underline{\underline{I}}_{N_{T}} \otimes \underline{\underline{\theta}}^{M} \end{bmatrix}. \qquad (\text{eq. 21})$$

Taking (1) and (2) into account, the model (18) is extended to the STBC input/output matrix model

$$\underline{y}_{stbc}[i] = \underline{\underline{H}}_{stbc} \cdot \underline{\underline{\theta}}_{stbc} \cdot \underline{\underline{\chi}}_{stbc} \cdot \underline{d}[i] + \underline{z}_{stbc}[i] \qquad (\text{eq. 22})$$

where the vector of transmitted symbols is defined as ($N_T = 2$)

$$\underline{d}[i] := \begin{bmatrix} \underline{d}^1[i]^T & \cdots & \underline{d}^M[i]^T \end{bmatrix}^T \qquad \text{(eq. 23)}$$

with

$$\underline{d}^m[i] := \begin{bmatrix} \underline{d}_1^m[i]^T & \cdots & \underline{d}_{N_T}^m[i]^T \end{bmatrix}^T \quad (m = 1, \cdots, M) \qquad \text{(eq. 24)}$$

and the received and noise vectors are defined as

$$\underline{y}_{stbc}[i] := \begin{bmatrix} \underline{y}[n] \\ \underline{y}[n+1]^* \end{bmatrix} \qquad \text{(eq. 25)}$$

$$\underline{z}_{stbc}[i] := \begin{bmatrix} \underline{z}[n] \\ \underline{z}[n+1]^* \end{bmatrix} \qquad \text{(eq. 26)}$$

where $i = |n/2|$, and

$$\underline{\underline{\chi}}_{stbc} := \begin{bmatrix} \underline{\underline{I}}_{MN_T B} \\ \underline{\underline{I}}_M \otimes \underline{\underline{\chi}} \end{bmatrix} \qquad \text{(eq. 27)}$$

$$\underline{\underline{\theta}}_{stbc} := \begin{bmatrix} \underline{\underline{\theta}} & \underline{\underline{0}}_{MN_T Q \times MN_T B} \\ \underline{\underline{0}}_{MN_T Q \times MN_T B} & \underline{\underline{\theta}}^* \end{bmatrix} \qquad \text{(eq. 28)}$$

$$\underline{\underline{H}}_{stbc} := \begin{bmatrix} \underline{\underline{H}} & \underline{\underline{0}}_{N_R MQ \times MN_T Q} \\ \underline{\underline{0}}_{N_R MQ \times MN_T Q} & \underline{\underline{H}}^* \end{bmatrix}. \qquad \text{(eq. 29)}$$

The received vector is formed by the juxtaposition of the vector received at the first time instant with the conjugate of the vector received at the second time instant.

In order to detect transmitted symbol block $\underline{d}^p[i]$ of the p-th user, based on the received sequence of blocks within the received vector $\underline{y}_{stbc}[i]$, a first solution consists of using a single-user receiver, that inverts successively the channel and all the operations performed at the transmitter. The single-user receiver relies implicitly on the fact that CDMA spreading has been applied on top of a channel equalised in the frequency domain. After CDMA de-spreading, each user stream is handled independently. However the single-user receiver fails in the uplink where multiple channels have to be inverted at the same time.

The optimal solution is to jointly detect the transmitted symbol blocks of the different users within the transmitted vector, $\underline{d}[i]$, based on the received sequence of blocks within the received vector, $\underline{y}_{stbc}[i]$. The optimum linear joint detector according to the MMSE criterion is computed in Klein et al. ('Zero forcing and minimum mean-square-error equalization for multiuser detection in code-division multiple-access channels', IEEE Trans. on Veh. Tech., vol.14, no.9, pp. 1784-1795, Dec.1996). At the output of the MMSE multi-user detector, the estimate of the transmitted vector is given by the expression:

$$\underline{d}[i] = \left( \frac{\sigma_w^2}{\sigma_d^2} \underline{\underline{I}}_{MN_TB} + \underline{\underline{G}}_{stbc}^H \cdot \underline{\underline{G}}_{stbc} \right)^{-1} \cdot \underline{\underline{G}}_{stbc}^H \cdot \underline{y}_{stbc}[i] \qquad \text{(eq. 30)}$$

where

$$\underline{\underline{G}}_{stbc} := \underline{\underline{H}}_{stbc} \cdot \underline{\underline{\theta}}_{stbc} \cdot \underline{\underline{\chi}}_{stbc}. \qquad \text{(eq. 31)}$$

The MMSE linear joint detector consists of two main operations :

- First, a filter matched to the composite impulse responses multiplies the received vector in order to minimise the impact of the white noise. The matched filter consists of the maximum ratio combining (MRC) of the different received antenna channels compensating the phase introduced by the channel, the CDMA intra-block de-spreading and the STBC de-coding.
- Second, the output of the matched filter is still multiplied with the inverse of the composite impulse response auto-correlation matrix of size $MN_TB$ that mitigates the remaining inter-symbol, inter-user and inter-antenna interference and compensates the amplitude variation introduced by the channel.

The linear MMSE receiver is different from the single-user receiver and suffers from a higher computational complexity. Fortunately, both the initialisation complexity, which is required to compute the MMSE receiver, and the data processing complexity can be significantly reduced by exploiting the initial cyclo-stationarity property of the channels. Based on a few permutations and on the properties of the block circulant matrices, it is shown in the next sections that the initial inversion of the square auto-correlation matrix of size $MN_TB$ can be replaced by the inversion of B square auto-correlation matrices of size $MN_T$.

Based on (19) and (21), one has that

$$\underline{\underline{H}} \cdot \underline{\underline{\theta}} = \begin{bmatrix} \underline{\underline{H}}_1^1 \cdot (\underline{\underline{I}}_{N_T} \otimes \underline{\theta}^1) & \cdots & \underline{\underline{H}}_1^M \cdot (\underline{\underline{I}}_{N_T} \otimes \underline{\theta}^M) \\ \vdots & \ddots & \vdots \\ \underline{\underline{H}}_{N_R}^1 \cdot (\underline{\underline{I}}_{N_T} \otimes \underline{\theta}^1) & \cdots & \underline{\underline{H}}_{N_R}^M \cdot (\underline{\underline{I}}_{N_T} \otimes \underline{\theta}^M) \end{bmatrix} \qquad \text{(eq. 32)}$$

which can be interestingly reorganised based on two consecutive permutations.
First, each user m and receive antenna $n_R$ inner matrix can be reorganised as

$$\underline{\underline{H}}_{n_R}^m \cdot (\underline{\underline{I}}_{N_T} \otimes \underline{\theta}^m) = \underline{\underline{\Psi}}_{n_R}^m \cdot \underline{\underline{\Upsilon}}_{N_T} \qquad \text{(eq. 33)}$$

where $\underline{\underline{\Upsilon}}_{N_T}$ is a permutation matrix of size $N_TB$, the role of which is to reorganise the columns of the initial matrix $\underline{\underline{H}}_{n_R}^m \cdot (\underline{\underline{I}}_{N_T} \otimes \underline{\theta}^m)$ according to the symbol and transmit antenna indexes successively, and

$$\underline{\underline{\Psi}}_{n_R}^m := \left[ \underline{\underline{\psi}}_{n_R}^m(1) \quad \cdots \quad \underline{\underline{\psi}}_{n_R}^m(B) \right] \qquad (\text{eq. 34})$$

in which the submatrix $\underline{\underline{\psi}}_{n_R}^m(1) := \left[ \underline{\psi}_{n_R,1}^m(1) \cdots \underline{\psi}_{n_R,N_T}^m(1) \right]$ of size $QXN_T$ is composed by the $N_T$ transmit antenna channel impulse responses (CIRs) convolved with the user code $m$, and each submatrix $\underline{\underline{\psi}}_{n_R}^m(b)$ of size $QxN_T$ is a

$(b-1)N$ cyclic rotation of the matrix $\underline{\underline{\psi}}_{n_R}^m(1)$ $(b=1, ...,B)$, where $N$ still represents the spreading code length.

Second, each receive antenna $n_R$ inner matrix can be reorganised as

$$\left[ \underline{\underline{H}}_{n_R}^1 \cdot (\underline{\underline{I}}_{N_T} \otimes \underline{\theta}^1) \quad \cdots \quad \underline{\underline{H}}_{n_R}^M \cdot (\underline{\underline{I}}_{N_T} \otimes \underline{\underline{\theta}}^M) \right] = \underline{\underline{\Psi}}_{n_R} \cdot \underline{\Upsilon}_M \cdot (\underline{\underline{I}}_M \otimes \underline{\Upsilon}_{N_T}) \qquad (\text{eq. 35})$$

where $\underline{\Upsilon}_M$ is a permutation matrix of size $MN_TB$, the role of which is to reorganise the columns of the initial matrix

$\left[ \underline{\underline{H}}_{n_R}^1 \cdot (\underline{\underline{I}}_{N_T} \otimes \underline{\theta}^1) \quad \cdots \quad \underline{\underline{H}}_{n_R}^M \cdot (\underline{\underline{I}}_{N_T} \otimes \underline{\underline{\theta}}^M) \right]$ according to the symbol, user and transmit antenna indexes suc-

cessively and

$$\underline{\underline{\Psi}}_{n_R} := \left[ \underline{\underline{\psi}}_{n_R}(1) \quad \cdots \quad \underline{\underline{\psi}}_{n_R}(B) \right] \qquad (\text{eq. 36})$$

with $\underline{\underline{\psi}}_{n_R}(b) := \left[ \underline{\underline{\psi}}_{n_R}^1(b) \cdots \underline{\underline{\psi}}_{n_R}^M(b) \right]$.

The block circulant matrix $\underline{\underline{\Psi}}_{n_R}$ can be decomposed into (see the above-mentioned *Vollmer* paper)

$$\underline{\underline{\Psi}}_{n_R} = \underline{\underline{F}}_{(N)}^H \cdot \underline{\underline{\Phi}}_{n_R} \cdot \underline{\underline{F}}_{(MN_T)} \qquad (\text{eq. 37})$$

where the matrices $\underline{F}_{(N)}$ and $\underline{\underline{F}}_{(MN_T)}$ are block Fourier transforms defined as

$$\underline{\underline{F}}_{(n)} := \underline{\underline{F}}_B \otimes \underline{\underline{I}}_n \qquad (\text{eq. 38})$$

where $\underline{F}_B$ is the orthogonal Fourier transform matrix of size $B$ and $\underline{I}_n$ is the identity matrix of size $n$ ($n$ equal to $N$ or $MN_T$).

The inner matrix $\underline{\underline{\Phi}}_{n_R}$ equals

$$\underline{\underline{\Phi}}_{n_R} := \begin{bmatrix} \underline{\phi}_{n_R}(1) & \cdots & \underline{0}_{N \times MN_T} \\ \vdots & \ddots & \vdots \\ \underline{0}_{N \times MN_T} & \cdots & \underline{\phi}_{n_R}(B) \end{bmatrix} \qquad (eq. \ 39)$$

where the block diagonal is found by dividing the result of the product $\underline{\underline{F}}_{(N)}\underline{\phi}_{n_R}(1)$ into blocks $\underline{\phi}_{n_R}(b)$ of size $NxMN_T$

($b=1, ..., B$), each block representing one of B user-independent and transmit antenna-independent sub-channels present in the communication.
Finally one gets

$$\underline{\underline{H}} \cdot \underline{\underline{\theta}} = (\underline{\underline{I}}_{N_R} \otimes \underline{\underline{F}}_{(N)}^H) \cdot \underline{\underline{\Psi}} \cdot \underline{\underline{F}}_{(MN_T)} \cdot \underline{\underline{\Upsilon}} \qquad (eq. \ 40)$$

where

$$\underline{\underline{\Psi}} := \begin{bmatrix} \underline{\underline{\Phi}}_1 \\ \vdots \\ \underline{\underline{\Phi}}_{N_R} \end{bmatrix} \qquad (eq. \ 41)$$

$$\underline{\underline{\Upsilon}} := \underline{\underline{\Upsilon}}_M \cdot (\underline{\underline{I}}_M \otimes \underline{\underline{\Upsilon}}_{N_T}) \qquad (eq. \ 42)$$

Taking into account the matrix definitions (27), (28), (29) and applying then in (31) one gets

$$\underline{\underline{G}}_{stbc} := \begin{bmatrix} \underline{\underline{H}} & \underline{0}_{N_R MQ \times MN_T Q} \\ \underline{0}_{N_R MQ \times MN_T Q} & \underline{\underline{H}}^* \end{bmatrix} \cdot \begin{bmatrix} \underline{\underline{\theta}} & \underline{0}_{MN_T Q \times MN_T B} \\ \underline{0}_{MN_T Q \times MN_T B} & \underline{\underline{\theta}}^* \end{bmatrix} \cdot \begin{bmatrix} \underline{\underline{I}}_{MN_T B} \\ \underline{\underline{I}}_M \otimes \underline{\underline{\chi}} \end{bmatrix} \qquad (eq. \ 43).$$

Multiplying the first two matrices and relying on the permutation (40) one obtains

$$\underline{\underline{G}}_{stbc} := \begin{bmatrix} (\underline{\underline{I}}_{N_R} \otimes \underline{\underline{F}}_{(N)}^H) \cdot \underline{\underline{\Psi}} \cdot \underline{\underline{F}}_{(MN_T)} \cdot \underline{\underline{\Upsilon}} & \underline{0}_{N_R MQ \times MN_T B} \\ \underline{0}_{N_R MQ \times MN_T B} & (\underline{\underline{I}}_{N_R} \otimes \underline{\underline{F}}_{(N)}^T) \cdot \underline{\underline{\Psi}}^* \cdot \underline{\underline{F}}_{(MN_T)}^* \cdot \underline{\underline{\Upsilon}}^* \end{bmatrix} \begin{bmatrix} \underline{\underline{I}}_{MN_T B} \\ \underline{\underline{I}}_M \otimes \underline{\underline{\chi}} \end{bmatrix}$$

$$(eq. 44)$$

from which the term inside the inversion in the MMSE expression (30) can be computed as follows

$$\underline{\underline{G}}_{stbc}^H \cdot \underline{\underline{G}}_{stbc} = \underline{\underline{\Upsilon}}^H \cdot \underline{\underline{F}}_{(MN_T)}^H \cdot \underline{\underline{\Psi}}^H \cdot \underline{\underline{\Psi}} \cdot \underline{\underline{F}}_{(MN_T)} \cdot \underline{\underline{\Upsilon}}$$
$$+ (\underline{\underline{I}}_M \otimes \underline{\underline{\chi}}^H) \cdot \underline{\underline{\Upsilon}}^T \cdot \underline{\underline{F}}_{(MN_T)}^T \cdot \underline{\underline{\Psi}}^T \cdot \underline{\underline{\Psi}}^* \cdot \underline{\underline{F}}_{(MN_T)}^* \cdot \underline{\underline{\Upsilon}}^* \cdot (\underline{\underline{I}}_M \otimes \underline{\underline{\chi}}) \qquad (eq. \ 45)$$

In equation (45) the STBC coding matrix can be reorganised taking into account that

$$(\underline{\underline{I}}_M \otimes \underline{\underline{\chi}}^H) \cdot \underline{\underline{\Upsilon}}^T \cdot \underline{\underline{F}}^T_{(MN_T)} = \underline{\underline{\Upsilon}}^T \cdot \underline{\underline{F}}^T_{(MN_T)} \cdot (\underline{\underline{I}}_{BM} \otimes \underline{\underline{\chi}}^{\bullet}_{N_T}) \quad (eq.\ 46)$$

yielding an equivalent expression with a lower inversion complexity

$$= \underline{\underline{\Upsilon}}^H \cdot \underline{\underline{F}}^H_{(MN_T)} \cdot \left( \underline{\underline{\Psi}}^H \cdot \underline{\underline{\Psi}} + (\underline{\underline{I}}_{BM} \otimes \underline{\underline{\chi}}^{\bullet}_{N_T}) \cdot \underline{\underline{\Psi}}^T \cdot \underline{\underline{\Psi}}^{\bullet} \cdot (\underline{\underline{I}}_{BM} \otimes \underline{\underline{\chi}}_{N_T}) \right) \cdot \underline{\underline{F}}_{(MN_T)} \cdot \underline{\underline{\Upsilon}} \quad (eq.\ 47)$$

The inner matrix in (47) is a block diagonal matrix where each block, of size $MN_T \times MN_T$, corresponds to a symbol b. Identifying the subpart of size $N_T \times N_T$ of each block corresponding to the users $m_1$ and $m_2$, it is equal to

$$\sum_{n_R=1}^{N_R} \begin{bmatrix} \underline{\psi}^{m_1}_{n_R,1}(b)^H \cdot \underline{\psi}^{m_2}_{n_R,1}(b) + \underline{\psi}^{m_2}_{n_R,2}(b)^T \cdot \underline{\psi}^{m_1}_{n_R,2}(b)^{\bullet} & \underline{\psi}^{m_1}_{n_R,1}(b)^H \underline{\psi}^{m_2}_{n_R,2}(b) - \underline{\psi}^{m_2}_{n_R,2}(b)^T \underline{\psi}^{m_1}_{n_R,1}(b)^{\bullet} \\ \underline{\psi}^{m_1}_{n_R,2}(b)^H \underline{\psi}^{m_2}_{n_R,1}(b) - \underline{\psi}^{m_2}_{n_R,1}(b)^T \underline{\psi}^{m_1}_{n_R,2}(b)^{\bullet} & \underline{\psi}^{m_1}_{n_R,2}(b)^H \underline{\psi}^{m_2}_{n_R,2}(b) + \underline{\phi}^{m_2}_{n_R,1}(b)^T \underline{\phi}^{m_1}_{n_R,1}(b)^{\bullet} \end{bmatrix}$$

$$(eq.\ 48)$$

which is a diagonal matrix only if $m_1 = m_2$.

As a result of (47) and (48), the linear matched filter allows for optimal combining of the signals coming from the two transmit antennas and complete inter-antenna interference removal for each user independently. The high complexity inversion of the inner equalisation matrix reduces to the inversion of B complex Hermitian matrices of size $MN_T$, that are to be multiplied with the matched filter output in order to mitigate the remaining inter-user interference.

Based on (40) and (47), the MMSE multi-user joint detection decomposes into the successive operations (see Fig.4). The method steps are explained for an example with two transmit antennas.

A. separation of the received stream of block coded data in a number of STBC data streams equal to the STBC coding length at the transmitter; with 2 Tx antennas this obviously yields two received STBC data streams.
B. performing a transformation composed of FFT operations of a size equal to the data block size (B),
C. maximum ratio combining (MRC) of the different receive antenna signals and CDMA despreading,
D. STBC decoding by combining the different received data streams,
E. mitigation of the inter-user, inter-antenna interference by multiplication with the inner matrix,
F. IFFT to bring the output data to the time domain,
G. permutation to arrange the result according to the user, transmit antenna and symbol indexes successively.

At the output of the STBC decoding, the two transmit antenna streams are perfectly orthogonalised for each user independently.

If the environment is dynamic, the receiver can be slightly adapted to take the variation of the propagation channels into account. Fig.5 shows the modified scheme. The matrix $\underline{\underline{\Psi}}$, until now assumed to be constant in time, can be updated over the successive time instants. Taking again the example of a two-antenna scheme, which was already discussed previously, this gives rise to the matrices $\underline{\underline{\Psi}}_1$ and $\underline{\underline{\Psi}}_2$, relative respectively to the time instants 1 and 2.

The complexity required at the base station to compute the multi-user receiver during the initialisation phase is given in Table I. The two main operations are detailed: the inner matrix computation and the inversion of the inner matrix. A significant gain of initialisation complexity is achieved by computing the MMSE joint detector in the frequency domain (using the result (40)) instead of in the time domain (using the initial expression (30)).

Table I

|  | Time domain | Frequency domain |
|---|---|---|
| Inner product | $2NB^3M^3\ (N_RN_T)$ | $2N\ BM^2\ (N_RN_T^2)$ |
| Inversion | $2B^3M^3N^3T$ | $2BM^3N^3T$ |

The complexity needed during the data processing phase to receive each transmitted complex symbol block is further given in the Table 2. While additional FFT and IFFT operations are required to move to the frequency domain and back to the time domain, the data processing complexity required to mitigate the inter-user and inter-antenna interference is lower in case of frequency domain processing.

TABLE II

|  | Time domain | Frequency domain |
|---|---|---|
| FFT | - | $2NN_RB \log_2 B$ |
| Interference mitigation | $2NB^2M^2(N_RN_T)$ | $2NB^2M(N_RN_T)$ |
| IFFT | - | $MN_TB \log_2 B$ |

Now the gain obtained by using STBC coding at the transmitter is evaluated in the uplink of a realistic cellular system. The propagation environment is modelled by a tapped delay line channel model, where each tap is assumed to have a Rayleigh distribution. Monte-Carlo simulations have been performed to average the bit error rate (BER) over 500 stochastic channel realisations.

The system parameters are summarised in Table III. A static cellular system is considered, which operates in an outdoor propagation environment. This propagation environment is modelled by the ITU Vehicular Type A model, which is characterised by specular multipath (coming from discrete, coherent reflections from smooth metal surfaces) with a maximum excess delay of 2510 ns.

TABLE III

| Channel model | ITU Vehicular Type A |
|---|---|
| Carrier frequency | 2 GHz |
| Signaling rate | 5 MHz |
| Roll-off | 0.2 |
| Spreading factor | $SF = 8$ |
| Modulation format | QFSK |
| Number of subcarriers | $Q = 64$ |
| Cyclic prefix length | $L = 16$ |
| Convolutional code rate | 3/4 |

STATIC CELLULAR SYSTEM PARAMETERS.

The system operates at a carrier frequency of 2 GHz, with a system bandwidth of 5 MHz. The transmitted signals are shaped with a half-rooth Nyquist in order to limit the bandwidth. A roll-off factor equal to 0.2 has been assumed.

The information bandwidth is spread by a spreading factor (SF) equal to SF=8. The number of users active in the system varies from 1 (low system load) to 8 (high system load). The user signals are spread by periodic Walsh-Hadamard codes for spreading, which are overlayed with an aperiodic Gold code for scrambling. QPSK modulation is used with Q=64 subchannels, and a cyclic prefix length of L=16. A convolutional code with a rate of 3/4 is applied on each user bit stream separately.

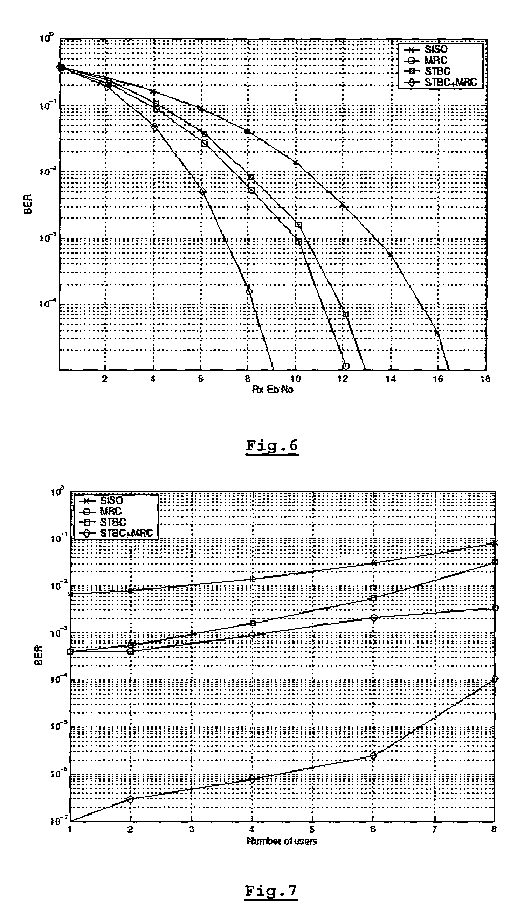

Figure 6 compares the diversity gain obtained by the use of multiple antennas at each side of the link. A typical system load of 4 users is assumed. A significant gain is achieved when diversity is exploited by the use of two antennas at only one side of the link (STBC or MRC is used). A supplementary gain can be obtained if two antennas are available at both sides (STBC is used in combination to MRC). It can be observed that MRC slightly outperforms STBC.

Figure 7 shows the impact of the system load on the SNR gain obtained by the use of multiple antennas. An SNR equal to 10 dB is assumed. In case of STBC, it has been analytically proven that the inter-antenna interference of the user of interest is totally cancelled. However, STBC still relies on the good orthogonality properties of the CDMA codes and on joint detection to handle the inter-antenna interference coming from the other users. MRC does not suffer from this effect since it is applied at the receiver. When only one user is active in the system, STBC and MRC perform equally well. However, the gap between STBC and MRC increases with the number of users active in the system due to the increasing level of interference coming from the other users.

**Claims**

1. Method for wireless transmission of a sequence of data symbols from a transmitter to a receiver, said transmitter being provided with at least two transmit antennas, comprising the steps of :

   - converting said sequence of data symbols into at least one stream of blocks of independent data symbols to be transmitted,
   - performing a block coding operation on said at least one stream of data symbol blocks, yielding a coded block of data symbols on each of said at least two antennas,
   - applying a spreading operation on each data symbol of said coded block of data symbols, yielding spread coded blocks,
   - adding transmit redundancy to said spread coded blocks, and
   - transmitting said spread coded blocks with transmit redundancy.

2. Method for wireless transmission as in claim 1, wherein said block coding operation is a space-time block coding operation.

3. Method for wireless transmission as in claim 1 or 2, wherein the steps of said method are performed for a plurality of users, each user being connected to a user-specific terminal.

4. Method for wireless transmission as in any of claims 1 to 3, wherein said spreading operation is performed with a user-specific code sequence.

5. Method for wireless transmission as in any of claims 1 to 4, wherein said step of adding transmit redundancy comprises the addition of a cyclic prefix.

6. Method for wireless transmission as in claim 1, wherein said transmitter provided with at least two antennas is a terminal and said receiver is a base station.

7. Method for wireless reception of block coded data transmitted, for a plurality of users, by a plurality of transmitters, each of said transmitters being provided with at least two transmit antennas, comprising the steps of :

   - separating said received block coded data in a number of received data streams, said number dependent on the block coding applied on said blocks of data in said transmitters, said received data streams comprising block coded blocks of data from different users and different transmit antennas, and
   - performing on said block coded blocks of data comprised in said number of received data streams a computation step to order said received data per user and per transmit antenna, said computation step comprising a block decoding and an intrablock despreading operation, whereby said computation step divides each of said block coded blocks of data into sub-channels, said block coded blocks of data subsequently being combined per sub-channel, yielding a single combined data stream of per sub-channel blocks of data, ordered per user and per transmit antenna.

8. Method for wireless reception as in claim 7, further comprising the steps of

   - cancelling interference by combining, for each of said sub-channels, data in said single combined data stream of per sub-channel blocks of data corresponding to only one sub-channel, yielding interference cancelled per sub-channel blocks of output data,
   - transforming said interference cancelled per sub-channel blocks of output data over all sub-channels, yielding transformed blocks of output data,
   - reordering said transformed blocks of output data per user and per transmit antenna.

9. Method for wireless reception as in claim 7, wherein said dividing into sub-channels is performed by means of a plurality of Fast Fourier transforms.

10. Method for wireless reception as in claim 8, wherein said step of transforming is performed with an inverse Fast Fourier transform operation.

11. Method for wireless reception as in any of claims 7 to 10, wherein said computation step comprises a phase correction on each of said sub-channels.

12. Method for wireless reception as in any of claims 7 to 11, wherein said interference cancellation step comprises an amplitude equalisation on each of said sub-channels.

13. Method for wireless reception as in any of claims 7 to 12, wherein a plurality of receive antennas is used for receiving said block coded data.

14. Transmit device for wireless communication, performing the method for wireless transmission as in any of claims 1 to 6.

15. Transmit device for wireless transmission of at least one stream of blocks of data, said transmit device being provided with at least two transmit antennas and further comprising block coding means to perform a block coding operation on said at least one stream of blocks of data, said block coding means outputting a coded block of data on each of said at least two antennas, said transmit device further comprising spreading means to spread said coded block of data on each of said at least two antennas.

16. Receiver device for wireless communication, performing the method for wireless reception as in any of claims 7 to 13.

17. Receiver device for wireless reception of block coded data transmitted, for a plurality of users, by a plurality of transmitters, each of said transmitters being provided with at least two transmit antennas, comprising at least one receive antenna, separating means for separating said received block coded data in a number of received data streams, and further comprising for each of said received data streams means for block decoding and block de-spreading.

18. Receiver device as in claim 17, further comprising interference cancellation means arranged for cancelling interference on a sub-channel per sub-channel basis.

(A) Base station transmitter

(B) Mobile terminal receiver

## Fig.1

(A) Mobile terminal transmitter

(B) Base station receiver

## Fig.2

**Fig.3**

**Fig.4**

**Fig.5**

**Fig.6**

**Fig.7**

**European Patent Office**

# EUROPEAN SEARCH REPORT

Application Number

EP 05 44 7109

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | EP 1 357 693 A (INTERUNIVERSITAIR MICROELEKTRONICA CENTRUM) 29 October 2003 (2003-10-29) * paragraphs [0006], [0012], [0020], [0050], [0051], [0055], [0056] * ----- | 1-18 | H04L1/06 |
| A | US 2004/057530 A1 (TAROKH VAHID ET AL) 25 March 2004 (2004-03-25) * abstract * ----- | 1-18 | |

TECHNICAL FIELDS SEARCHED (Int.Cl.7)

H04L
H04B

The present search report has been drawn up for all claims

| Place of search | Date of completion of the search | Examiner |
|---|---|---|
| The Hague | 20 October 2005 | Bernardini, A |

EPO FORM 1503 03.82 (P04C01)

**EP 1 722 500 A1**

## ANNEX TO THE EUROPEAN SEARCH REPORT
## ON EUROPEAN PATENT APPLICATION NO.

EP 05 44 7109

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2005

| Patent document cited in search report | | Publication date | Patent family member(s) | | Publication date |
|---|---|---|---|---|---|
| EP 1357693 | A | 29-10-2003 | NONE | | |
| US 2004057530 | A1 | 25-03-2004 | AU | 2003299007 A1 | 08-04-2004 |
| | | | EP | 1547290 A1 | 29-06-2005 |
| | | | WO | 2004028063 A1 | 01-04-2004 |

EPO FORM P0459

For more details about this annex : see Official Journal of the European Patent Office, No. 12/82

23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• EP 1357693 A1

### Non-patent literature cited in the description

• **A. CZYLWIK.** Comparison between adaptive OFDM and single carrier modulation wi th frequency domain equalization. *IEEE Proc. of VTC,* May 1997, 865-869

• **VOLLMER et al.** Comparative study of joint detection techniques for TD-CDMA based mobile radio systems. *IEEE J. on Sel. Areas in Comm.,* August 2001, vol. 19 (8), 1461-1475

• **ALAMOUTI.** A simple transmit diversity technique for wireless communications. *IEEE Journal on Selected Areas in Communications,* October 1998, vol. 16 (8

• **F. PETRÉ et al.** *IEEE J. on Sel. Areas in Comm., Special issue on MIMO Systems and Applications,* April 2003, vol. 21 (3), 350-361

• Cyclic-prefix CDMA with antenna diversity. **VOOK et al.** IEEE Proceedings of VTC Spring. May 2002, vol. 2, 1002-1006

• **TAROKH et al.** Space-time block codes from orthogonal designs. *IEEE Trans. on Information Theory,* July 1999, vol. 45, 1456-1467

• **KLEIN et al.** Zero forcing and minimum mean-square-error equalization for multiuser detection in code-division multiple-access channels. *IEEE Trans. on Veh. Tech.,* December 1996, vol. 14 (9), 1784-1795